# EUROPÄISCHE PATENTSCHRIFT

(11) **EP 4 230 478 B1**
(45) Veröffentlichungstag und Bekanntmachung des Hinweises auf die Patenterteilung: **19.06.2024**
(21) Anmeldenummer: 22214249.9
(22) Anmeldetag: 16.12.2022
(51) Int. Cl.: B60P 3/34

(54) **CAMPINGANHÄNGER FÜR EIN KRAFTFAHRZEUG, INSBESONDERE ZELTANHÄNGER**
CAMPING TRAILER FOR A MOTOR VEHICLE, ESPECIALLY TENT TRAILER
REMORQUE DE CAMPING POUR UN VÉHICULE AUTOMOBILE, EN PARTICULIER REMORQUE DE TENTE

(30) Priorität: 18.02.2022 LU 501513
(43) Veröffentlichungstag der Anmeldung: 23.08.2023
(73) Patentinhaber: Urbanoid GmbH, 67655 Kaiserslautern (DE)
(72) Erfinder: HOFFMANN, Martin Paul, 67655 Kaiserslautern (DE); OFFENBECK, Thomas Stascha, 81827 München (DE)
(74) Vertreter: Zeiner, Johannes Michael

(56) Entgegenhaltungen:
- CN-U- 213 676 490
- FR-A- 1 440 788
- US-A- 3 456 979
- US-A- 4 533 171
- US-A- 4 754 998
- US-A1- 2008 122 197
- US-A1- 2021 316 804

## Beschreibung

Die Erfindung betrifft einen Campinganhänger für ein Kraftfahrzeug, insbesondere einen Zeltanhänger für einen Personenkraftwagen, der ein Räder aufweisendes Anhängerunterteil und ein mit dem Anhängerunterteil bewegbar verbundenes Anhängeroberteil aufweist, das aus einer Reisestellung, in der es einen Anhängerunterteildeckel bildet, in eine Campingstellung, in der der Campinganhänger zur Personenaufnahme geeignet ist, verschwenkbar ist, wobei das Anhängerunterteil eine Ausnehmung aufweist, die in der Campingstellung einen Fußraum für eine in dem Campinganhänger sitzende Person bildet.

In der Reisestellung ist der Campinganhänger hinter dem Kraftfahrzeug verkehrssicher herziehbar, während der Campinganhänger in der Campingstellung als Unterkunft nutzbar ist.

Das Anhängerunterteil und das Anhängeroberteil, die beide aus Kunststoff, Stahl, Aluminium oder Magnesium, deren Legierungen oder Verbundwerkstoffen gebildet sein können, bilden in der Reisestellung eine starre, einbruchssichere sowie aerodynamische Hülle.

Denkbar ist, dass nachhaltige Konstruktionsmaterialien verwendet werden, das heißt solche, die nachwachsende Rohstoffe aufweisen.

Obwohl denkbar ist, dass das Anhängeroberteil und das Anhängerunterteil aus verschiedenen Materialien gebildet sind, sind beide vorzugsweise aus dem selben Material gebildet.

Aus US 4,754,998 A, US 4,533,171 A, FR 1 440 788 A, CN 213 676 490 U sind Zeltanhänger bekannt, die eine Ausnehmung aufweisen, die als Fußraum geeignet ist.

Aus US 2021/0316804 A1 ist ein zusammenlegbarer Anhänger bekannt.

US 3,456,979 A beschreibt einen Campinganhänger 10 mit einem Unterteil 11 und einem Oberteil 25, wobei das Oberteil 25 linear nach oben bewegbar ist und einen Dachabschnitt bilden kann.

Als Zeltanhänger ausgebildete Campinganhänger für Kraftfahrzeuge sind außerdem aus CN 207 550 043 U, CN 207 550 044 U und US 5,375,902 A bekannt. Zwar ermöglicht jeder dieser Zeltanhänger die Ausbildung einer ebenen, sich über das Anhängerober- und Anhängerunterteil erstreckende Liegefläche, jedoch ist ein bequemes aufrechtes Sitzen in einem Zelt der aus diesen Druckschriften bekannten Zeltanhängern nicht möglich.

Als Wohnwagen ausgebildete Campinganhänger wie der aus US 2007/0262611 A1 bekannte ermöglichen Benutzern zwar ein bequemes Sitzen in aufrechter Position, sind jedoch sehr groß und erfordern daher ein besonders leistungsstarkes Kraftfahrzeug als Zugfahrzeug, beispielsweise einen Geländewagen.

Der Erfindung liegt die Aufgabe zugrunde, einen Campinganhänger der eingangs genannten Art zu schaffen, der besonders kompakt ausgebildet ist und im Innern des Zeltes mehr Platz und Komfort bietet als bisher bekannte.

Ferner liegt der Erfindung die Aufgabe zugrunde, einen Campinganhänger der eingangs genannten Art auszubilden, der mit einem leistungsschwächeren Kraftfahrzeug wie einem Kleinwagen benutzbar ist.

Erfindungsgemäß wird die Aufgabe dadurch gelöst, dass das Anhängerunterteil eine höhenverstellbare Platte aufweist, die zur Verwendung als Sitz- oder Liegefläche eingerichtet ist, und die verschwenkbar an eine Höhenverstelleinrichtung angelenkt ist.

Aufgrund der Verschwenkbarkeit ist ein Stauraum unterhalb der Platte, die aus Holz, Metall, Kunststoff oder einem Verbundwerkstoff gebildet sein kann, vorteilhaft einfach zugänglich und nutzbar. Vorteilhaft wird für eine Reise in dem Anhängerunterteil zusätzlicher Stauraum geschaffen. Beispielsweise kann in einer Grundstellung, das heißt in einer unteren Stellung, eine Matratze während der Reise verstaut werden, während in einer oberen Stellung, das heißt einer Schlaf- oder Sitzstellung, die Matratze bestimmungsgemäß als bequeme Unterlage einsetzbar ist. Ohne diesen zusätzlichen Stauraum wäre eine kompakte Ausbildung des erfindungsgemäßen Campinganhängers nicht möglich.

Es versteht sind, dass Zwischenstellungen zwischen der unteren und der oberen Stellung denkbar sind.

Zur Höhenverstellung der Platte ist eine Höhenverstelleinrichtung vorgesehen, die beispielsweise zwei auf gegenüberliegenden Seiten des Anhängerunterteils angeordnete höhenverstellbare horizontale Schienen umfassen kann, an die die Platte in der unteren und der oberen Stellung anliegt.

Zur Höhenverstellung kann jede der höhenverstellbaren Schienen vertikale Halteplatten mit J-förmig ausgebildeten Langlöchern als Führungsmittel aufweisen, in die Führungsbolzen eingreifen, die ortsfest an das Anhängerunterteil angebracht sind. Durch die J-förmige Ausbildung sind die untere und die obere Stellung möglich.

Es versteht sich, dass bei einer anderen Ausbildung der Langlöcher mehrere Zwischenstellungen zwischen der oberen und der unteren Stellung denkbar sind.

Es versteht sich außerdem, dass Sicherungsmittel vorgesehen sein können, damit eine unerwünschte Bewegung der Platte aus der oberen in die untere Stellung verhindert wird.

Dadurch, dass in das Anhängerunterteil eine Ausnehmung eingebracht ist, ist ein Teil des verfügbaren Raums als Fußraum nutzbar, so dass den Anhänger zum Camping benutzende Personen auf einer Sitz- oder Liegefläche bequem aufrecht sitzen können, da deren Füße in dem Fußraum abgestellt werden können.

Zweckmäßigerweise ist der Fußraum zu einer Seite, insbesondere einer Rückseite des Anhängerunterteils, hin offen und ist vorzugsweise durch ein Verschlusselement verschließbar. Eine Rückseite ist diejenige Seite des Campinganhängers, die einer Anhängerdeichsel abgewandt ist. Eine Öffnung kann eine Aussparung in einer Wand des Anhängerunterteils sein, durch die vorteilhaft ein bequemes, nahezu barrierefreies Einsteigen in den Campinganhänger möglich ist. Eine hohe Einstiegskante muss nicht überwunden werden.

Das Verschlusselement kann als Flügeltür, Klappe oder Stecktür ausgebildet sein. Das Verschlusselement bildet außerdem einen bündigen Wandabschnitt des Anhängerunterteils. Vorteilhaft besteht in der Reisestellung ein besonders effektiver Diebstahlschutz.

In der Campingstellung ist das Verschlusselement nicht erforderlich. Die Aussparung in der Wand des Anhängerunterteils kann dann durch einen eine verschließbare Zelteingangsöffnung bildenden Zeitabschnitt überdeckt werden.

Zweckmäßigerweise ist die höhenverstellbare Platte in einer unteren Stellung horizontal gegenüber einer oberen Stellung verschoben. Es kann ein Anlagemittel vorgesehen sein, das Anlageelemente oder Stützen umfasst, die an einer Plattenunterseite angebracht sind, und die in der unteren Stellung, die eine Grundstellung ist, in das Anhängerunterteil eintauchen und in einer oberen Stellung, die eine Schlaf- oder Sitzstellung ist, an das Anhängerunterteil anliegen. Vorteilhaft wird eine platzsparende Abstützmöglichkeit für die Platte geschaffen, die deren Durchbiegen wirksam verhindert. Insgesamt wird dadurch ein bequemer Sitz- oder ergonomischer Schlafplatz geschaffen.

In einer Ausgestaltung der Erfindung ist dieHöhenverstelleinrichtung, an die die höhenverstellbare Platte angelenkt ist, mehrteilig ausgebildet.

Die mehrteilige Höhenverstelleinrichtung kann beispielsweise zwei auf gegenüberliegenden Seiten des Anhängerunterteils angeordnete höhenverstellbare horizontale Schienen umfassen, an die die verschwenkbare Platte in einer unteren und einer oberen Stellung anliegt. Zur Höhenverstellung kann jede der höhenverstellbaren Schienen vertikale Halteplatten mit J-förmig ausgebildeten Langlöchern als Führungsmittel aufweisen, in die Führungsbolzen eingreifen, die ortsfest an das Anhängerunterteil angebracht sind. Durch die J-förmige Ausbildung sind eine untere und eine obere Stellung möglich.

Es versteht sich, dass Sicherungsmittel vorgesehen sein können, damit eine unerwünschte Bewegung der Platte aus der oberen in die untere Stellung verhindert wird.

In einer Ausgestaltung der Erfindung weist das Anhängerunterteil eine verschwenkbare, höhenverstellbare Platte auf, die zur Verwendung als Sitz- oder Liegefläche eingerichtet ist, und die an eine Höhenverstelleinrichtung angelenkt ist.

Vorteilhaft ist ein Stauraum unterhalb der Platte besonders gut zugänglich, insbesondere von innen, wenn der Campinganhänger in einer Campingstellung ist. Dadurch ist der Stauraum beispielsweise bei Regen für einen Benutzer des Campinganhängers einfach zugänglich ohne nass zu werden, wie dies bei einem nur von außen zugänglichen Stauraum der Fall wäre.

In einer Ausgestaltung der Erfindung weist die höhenverstellbare Platte einen Ausschnitt auf. Dessen Größe entspricht zumindest oder genau der Grundfläche des Fußraums. Der Ausschnitt kann zu einer Rückseite des Anhängerunterteils hin offen sein, so dass im Bereich des Fußraums zwei gegenüberliegende zungenartige Plattenabschnitte gebildet werden, die durch den Ausschnitt voneinander getrennt sind und die zwei gegenüberliegende Sitzflächen ausbilden, die ein Gegenübersitzen zweier Personen, die ihre Füße in dem Fußraum abstellen können, vorteilhaft ermöglichen.

In einer weiteren Ausgestaltung der Erfindung umfasst das Anhängerunterteil zumindest einen Stauraum. Dazu kann das Anhängerunterteil zumindest bereichsweise hohl ausgebildet sein.

Der Stauraum ist insbesondere zur Aufnahme eines Wassertanks mit einer elektrischen Wasserpumpe, einer wiederaufladbaren Batterie und/oder von Gepäckstücken eingerichtet. Durch den Wassertank wird eine autarke Wasserversorgung und durch die wiederaufladbare Batterie wird eine autarke Stromversorgung vorteilhaft sichergestellt. Vorzugsweise befindet sich der Stauraum unterhalb einer höhenverstellbaren, verschwenkbaren Platte, die zur Verwendung als Sitz- oder Liegefläche eingerichtet ist.

Denkbar ist, dass weitere Stauräume vorgesehen sind, die insbesondere durch jeweils einen Deckel verschließbar sind.

In einer Ausgestaltung der Erfindung sind einige Zeltgestängeteile eines mehrteiligen Zeltgestänges verschwenkbar mit dem Anhängeroberteil verbunden. In der Reisestellung sind vorzugsweise alle Zeltgestängeteile in dem Anhängeroberteil verstaut. Vorteilhaft ist ein in dem Anhängeroberteil verfügbarer Stauraum nutzbar.

Vorzugsweise sind die Zeltgestängeteile U-förmig ausgebildet. Einige der Zeltgestängeteile sind an Enden von U-Schenkeln mit dem Anhängeroberteil verschwenkbar verbunden.

Sind sämtliche Zeltgestängeteile beispielsweise in Zeltgestängetaschen eines Zelts eingebracht, ist durch Bewegung aus einer Zelttransportstellung, in der die Zeltgestänge in dem Anhängeroberteil angeordnet sind, in die Campingstellung ein besonders einfacher und schneller Aufbau des Zelts möglich.

Zweckmäßigerweise weisen das Anhängeroberteil und das Anhängerunterteil an einer Außenseite und/oder einer Innenseite ein Mittel auf, durch das ein Zelt mit dem Anhängeroberteil und dem Anhängerunterteil lösbar verbindbar ist. Vorteilhaft wird ein Schutz vor einem Eindringen von Regenwasser oder von unbefugten Personen geschaffen

Denkbar ist, dass die lösbare Verbindung als Klettverbindung ausgebildet ist und das Verbindungsmittel weist entsprechende Klettverschlüsse auf.

Andere Verbindungsarten, beispielsweise eine Haken-Ösen-Verbindung, sind denkbar.

In einer weiteren Ausgestaltung der Erfindung umfasst der Campinganhänger einen vorzugsweise drehbaren Tisch mit einem Tischbein, das in den Fußraum hineinragt. Denkbar ist, dass in dem Fußraum ein hohlyzlindrisches Haltemittel angebracht ist, in das ein um eine Zylinderlängsachse drehbarer Tisch einsteckbar ist. Das Haltemittel kann als Rohrstück ausgebildet, welches an eine Innenwand der Ausnehmung, die den Fußraum bildet, angebracht ist. Wird in dieses Rohrstück ein Tischbein eines einbeinigen Tischs eingesteckt, wird ein um die Zylinderlängsachse des Rohrstücks drehbarer Campingtisch geschaffen.

Denkbar ist außerdem, dass das Tischbein in eine in dem Fußraum angebrachte Aufnahmetasche eingesteckt wird und durch ein Drehgelenk, das das Tischbein mit einer Tischplatte verbindet, ein drehbarer Tisch ausgebildet wird.

Es versteht sich, dass der einbeinige Tisch aus mehreren miteinander verschwenkbar verbundenen Tischplatten gebildet sein kann und Ausnehmungen für Getränkebehälter aufweisen kann.

Zweckmäßigerweise weist das Anhängerunterteil zwei auspuffartig gestaltete Versorgungseinrichtungen auf, von denen eine erste eine Ladebuchse zum Aufladen einer wiederaufladbaren, in dem Anhängerunterteil verstauten Batterie umfasst und eine zweite vorzugsweise einen Adapter zum Anschluss eines Wasserschlauchs, um aus einem in dem Anhängerunterteil verstauten Wassertank Wasser zu entnehmen.

Denkbar ist außerdem, dass aus der zweiten Versorgungseinrichtung ein Wasserschlauch herausziehbar ist, der beispielsweise zum Abduschen einer Person nutzbar ist.

In einer Ausgestaltung der Erfindung weist das Anhängeroberteil Ausnehmungen auf seiner Außenseite auf, die in der Campingstellung zur Aufnahme vom längenveränderbaren Stützen eingerichtet sind, die vorzugsweise an eine Anhängerdeichsel angelenkt sind.

Damit das Anhängeroberteil, welches aus der Reisestellung vorzugsweise in Richtung eines Kraftfahrzeugs, das den Campinganhänger zieht, verschwenkbar ist, in der Benutzungsstellung ausreichend positionsstabil aufgestellt sein kann, sind an die Anhängerdeichsel vorzugsweise zwei Stützen angelenkt, die jeweils mit einem insbesondere abgerundeten oberen Ende in die Ausnehmungen in dem Anhängeroberteil eingreifen und die in entgegengesetzte Richtungen von der Anhängerdeichsel weg verschwenkbar sind.

In jede der Ausnehmungen kann ein beispielsweise aus Gummi gebildetes Dämpfungselement eingebracht sein.

Sind die Stützen längenveränderbar, können Unebenheiten eines Untergrundes vorteilhaft ausgeglichen werden.

In einer weiteren Ausgestaltung der Erfindung ist eine Anhängerdeichsel in ihrer Länge veränderbar. Beispielsweise kann die Anhängerdeichsel teleskopartig oder in einer Führungshülse verschieb- und arretierbar ausgebildet sein. Insbesondere kann die Anhängerdeichsel mehrteilig ausgebildet sein. Dazu kann eine rohrartige Aufnahme eine Führungshülse bilden, die mit einem Fahrwerk des Campinganhängers fest verbunden ist und in die ein rohrförmiges Deichselteil eingreift, an das wiederum eine Deichselkupplung zur Verbindung der Anhängerdeichsel mit einer Anhängerkupplung eines Kraftfahrzeugs angebracht ist. Die Deichselkupplung ist vorzugsweise lösbar mit dem rohrförmigen Deichselteil verbunden.

Eine verlängerbare Anhängerdeichsel in verlängertem Zustand ermöglicht eine besonders gute Spurstabilität beim Fahren hinter dem Kraftfahrzeug, während eine verkürzte Anhängerdeichsel eine besonders platzsparende Lagerung ermöglicht, beispielsweise in einer Lagerungsstellung in aufrechter Position des Campinganhängers. In dieser Lagerungsstellung kann außerdem eine Deichselkupplung durch ein Griffstück ersetzt sein, so dass eine Handhabung vereinfacht wird.

In einer Ausgestaltung der Erfindung ist ein Rückstellmittel in das Anhängeroberteil eingebracht, das zur Anlage an eine Matratze vorgesehen ist. Den erfindungsgemäßen Campinganhänger benutzende Personen liegen in einer Schlafposition vorzugsweise mit dem Oberkörper im Bereich des Anhängeroberteils, während sich deren Beine bis in den Bereich des Anhängerunterteils erstrecken. Damit eine besonders ergonomische und wirbelsäulenschonende Liegeposition möglich ist, können Federelemente aufweisende oder ein als Lattenrost ausgebildetes Rückstellmittel vorgesehen sein.

Zweckmäßigerweise umfasst das Anhängerunterteil ein Aufnahmemittel, das zur Aufnahme eines Lagerungsgestells vorgesehen ist, durch das der Campinganhänger in einer aufrechten Position lagerbar ist. Der Campinganhänger kann ohne Beschädigung einer Außenhaut der beiden Anhängerteile beispielsweise in einer Garage vertikal aufgerichtet gelagert werden. Vorteilhaft ist eine besonders platzsparende und beschädigungsfreie Lagerung möglich. Das Aufnahmemittel kann als Vierkant- oder Rundrohr ausgebildet sein oder zumindest ein solches aufweisen.

Ein erfindungsgemäßer Campinganhänger kann insbesondere als sogenannter Zeltanhänger ausgebildet sein.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: Eine Ausführungsform eines erfindungsgemäßen Campinganhängers in mehreren verschiedenen Ansichten,
- Fig. 2: Details einer in Fig. 1 gezeigten Ausführungsform,
- Fig. 3: weitere Details einer in Fig. 1 gezeigten Ausführungsform,
- Fig. 4: eine weitere Ausführungsform eines erfindungsgemäßen Campinganhängers.

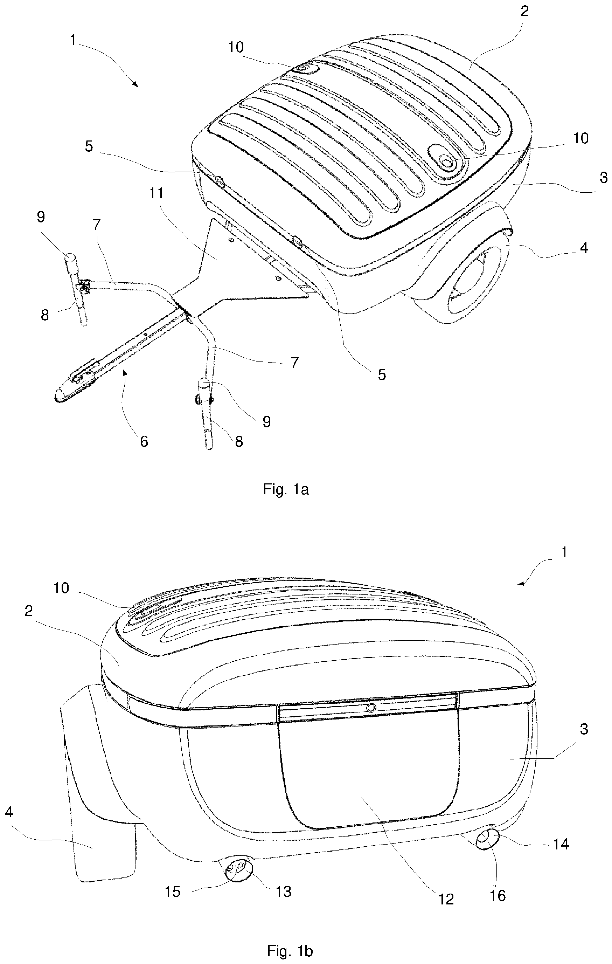

Ein in Fig. 1a in einer perspektivischen Ansicht gezeigter als Zeltanhänger 1 ausgebildeter Campinganhänger weist ein Anhängeroberteil 2 sowie ein Anhängerunterteil 3 mit Rädern 4 auf, wobei das Unter- und das Oberteil durch zwei Scharniere 5 verschwenkbar miteinander verbunden sind.

Das in Fig. 1a gezeigte Anhängeroberteil 2 ist in einer Reisestellung, das heißt es bildet einen Schutzdeckel für das Anhängerunterteil 3.

Eine Anhängerdeichsel 6 mit einer nicht näher bezeichneten Deichselkupplung ist in ihrer Länge verstellbar und in Fig. 1a ausgezogen gezeigt.

An die Anhängerdeichsel 6 sind mittels zweier Schwenkelemente 7 zwei längenverstellbare Stützen 8 angelenkt, die an einer Oberseite jeweils einen abgerundeten Endabschnitt 9 aufweisen, der abnehmbar ausgebildet ist.

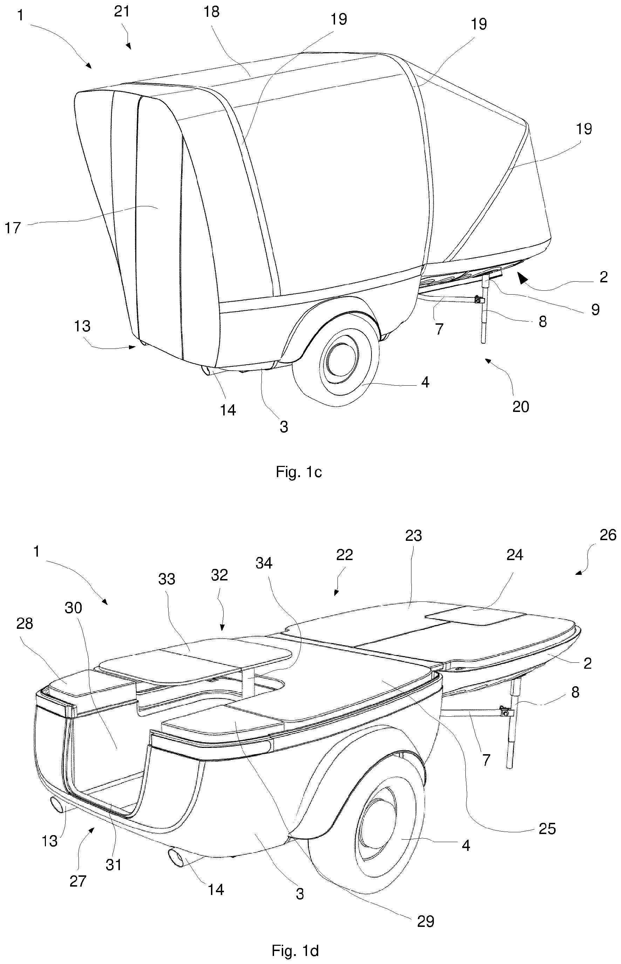

In das Anhängeroberteil sind Ausnehmungen 10 eingebracht, die zur Aufnahme der Endabschnitte 9 der Stützen 8 in einer in Fig. 1c und 1d gezeigten Campingstellung, in der der Zelthänger zur Personenaufnahme geeignet ist, eingreifen.

Es versteht sich, dass die Stützen 8 derart verschwenkbar sind, dass diese parallel zur Anhängerdeichsel an diese angelegt werden können, das heißt in eine Reisestellung gebracht werden können.

Ferner umfasst der in Fig. 1a gezeigte Zeltanhänger 1 ein Abdeckblech 11, welches an der Anhängerdeichsel 6 angebracht ist und auf dem beispielsweise ein Fahrradträger oder eine Gepäckbox abstell- und befestigbar ist.

Ein in Fig. 1b in einer perspektivischen Rückansicht gezeigter als Zeltanhänger 1 ausgebildeter Campinganhänger weist eine Stecktür 12 auf, die einen starren Wandabschnitt des Anhängerunterteils 3 bildet und bündig zu dem Anhängeroberteil 2 und dem Anhängerunterteil 3 ist. In der Reisestellung bildet die Stecktür 12 einen Einbruchschutz.

Außerdem umfasst der Zeltanhänger 1 zwei auspuffartig gestaltete Versorgungseinrichtungen 13, 14, von den eine erste 13 eine Ladebuchse 15 umfasst, durch die eine in Fig. 1 nicht gezeigte, in dem Anhängerunterteil 3 verstaute wiederaufladbare Batterie aufladbar ist, und eine zweite 14 einen Adapter 16 zum Anschluss eines Wasserschlauchs, durch den Wasser aus einem in Fig. 1 nicht gezeigten, in dem Anhängerunterteil 3 verstauter Wassertank entnehmbar ist.

Ein in Fig. 1c in einer perspektivischen Seitenansicht und in Fig. 1d in einer perspektivischen Seitenansicht aus Gründen der Übersichtlichkeit ohne Zelt gezeigter als Zeltanhänger ausgebildeter Campinganhänger 1 ist in einer Campingstellung, in der eine Aufnahme von Personen möglich ist und in der ein Anhängeroberteil um 180 Grad in Richtung einer Anhängerdeichsel 6 verschwenkt ist, so dass in Fig. 1a und Fig. 1b mit 10 bezeichnete Ausnehmungen abgerundete Endabschnitte 9 der Stützen 8 aufnehmen und eine Anordnung des Anhängerunterteils 3 bewirken, bei der die Ausbildung einer ebenen, sich über Anhängerunterteil 3 und Anhängeroberteil 2 erstreckenden vorzugsweise als Liegefläche ausgebildeten Fläche möglich ist.

Zum Betreten des Campinganhängers 1 in der Campingstellung ist eine verschließbare Eingangsöffnung 17 eines Zelts 18, dessen Zeltboden von den beiden Anhängerteilen 2, 3 gebildet ist, vorgesehen. In der Campingstellung ist die in Fig. 1b gezeigte Stecktür 12 nicht in das Anhängerunterteil 2 eingesteckt.

Das Zelt 18 weist ferner innenseitige Gestängeteiltaschen 19 auf, in die in Fig. 1 nicht gezeigte U-förmige Gestängeteile eines Zeltgestänges eingebracht sind, und sich von einer ersten Seite 20 zu einer gegenüberliegenden Seite 21 erstrecken.

Das Zelt 18 ist durch dem Fachmann bekannte Verbindungsmittel mit dem Anhängerunterteil 2 und dem Anhängeroberteil 3 verbunden.

Eine in Fig. 1d gezeigte mehrteilige Matratze 22, die mehrere bündige Matratzenteile 23-25 umfasst und in einem vorderen Bereich 26, das heißt einem einer Anhängerdeichsel zugewandten Bereich angeordnet ist, bildet eine ebene Liegefläche, die sich über das Anhängerunterteil 3 sowie das Anhängeroberteil 2 erstreckt.

Die Liegefläche weist eine Länge zwischen 2,20 m und 2,40 m und eine Breite zwischen 1,20m und 1,40 m auf.

Ein hinterer Bereich 27, der der Anhängerdeichsel 6a abgewandt ist, als Sitzfläche mit zwei Sitzplätzen 28, 29 ausgebildet.

Eine zu einer Rückseite des Zeltanhängers 1a offene Ausnehmung 30 in dem Anhängerunterteil 3a bildet einen Fußraum, in den hinein auf den Sitzplätzen 28, 29 sitzende Personen ihre Füße abstellen können. Dadurch ist vorteilhaft eine besonders bequeme und aufrechte Sitzposition möglich.

Eine Anhängerunterteilöffnung 31, durch die ein bequemes, nahezu barrierefreies Einsteigen möglich ist, ist durch eine in Fig. 1b und 1c gezeigte und dort mit dem Bezugszeichen 12 versehene Stecktür verschließbar. Die Anhängerunterteilöffnung 31 ist als Aussparung in einer Wand des Anhängerunterteils 3 ausgebildet.

Der Zeltanhänger 1 weist in dem hinteren Bereich 27 außerdem einen Tisch 32 mit einer mehrteiligen Tischplatte 33 auf, wobei die Tischplatte 33 um die Längsachse eines Tischbeins 34, das in den Fußraum 30 hineinragt, drehbar gelagert ist. Im Bereich des Tischbeins 34 sind zwei weitere Sitzplätze eingerichtet, nämlich auf dem Matratzenteil 25.

Obwohl der Campinganhänger 1 lediglich Schlafraum für zwei Personen bietet, ist ein Sitzbereich um den Tisch herum durch vier Personen nutzbar.

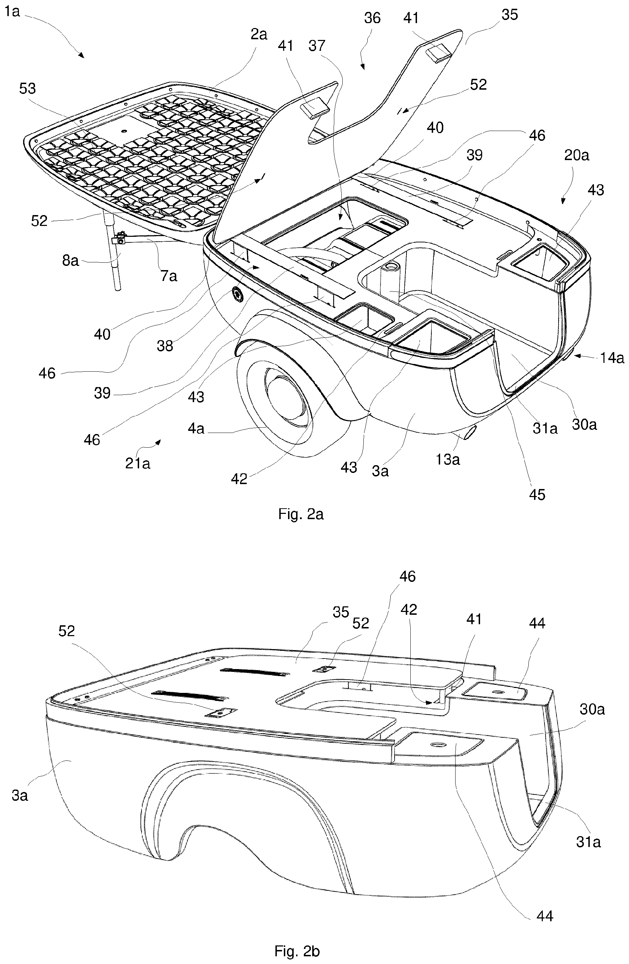

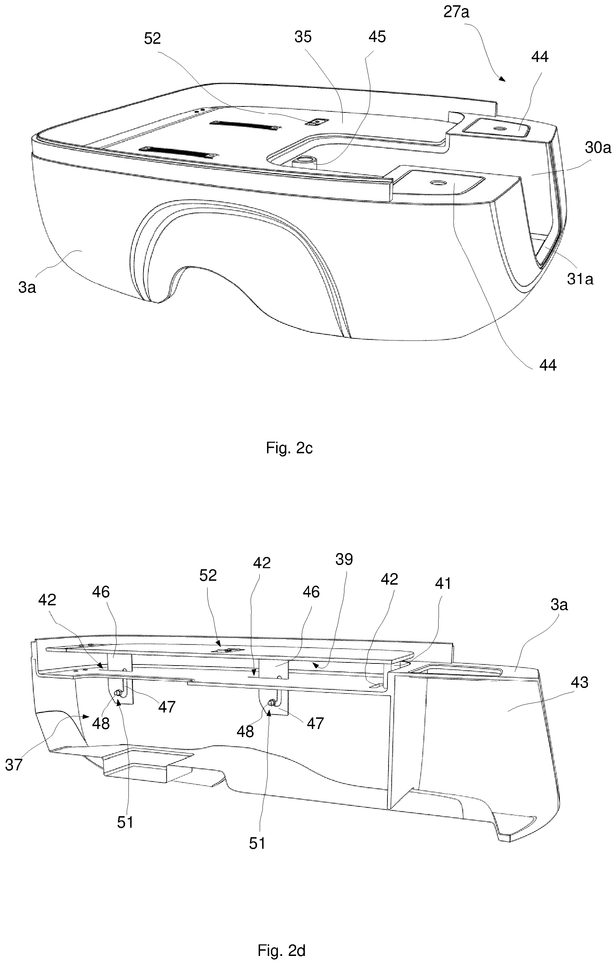

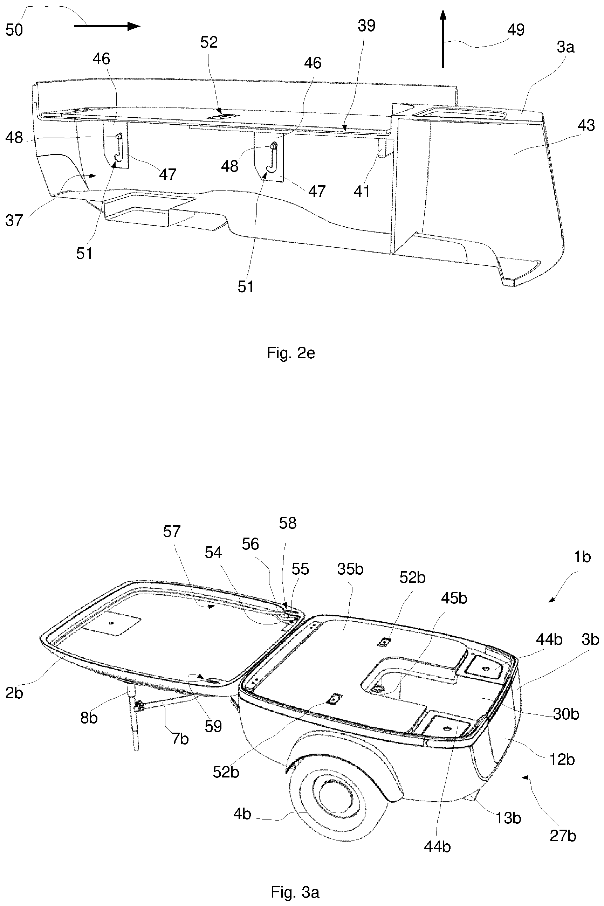

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Ein in Fig. 2a in einer perspektivischen Ansicht gezeigter als Zeltanhänger ausgebildeter Campinganhänger 1a weist eine verschwenkbare, höhenverstellbare Platte 35 auf, die einen Teil einer Sitz-und Liegefläche in einem Anhängerunterteil 3a bildet. Die Platte 35 weist einen Ausschnitt 36 auf, der genauso groß ist wie eine Grundfläche einer als Fußraum ausgebildeten Ausnehmung 30a.

Dadurch, dass die Platte 35 verschwenkbar ist, ist ein Raum darunter in dem zumindest bereichsweise hohlen Anhängerunterteil 3a als Stauraum 37 nutzbar. In diesem Stauraum 37 können ein Wassertank samt Wasserpumpe, eine wiederaufladbare Batterie und/oder Gepäckstücke verstaut werden.

Eine Höhenverstelleinrichtung 38, mit der die höhenverstellbare Platte 35 aus einer unteren, in Fig. 2c im Detail gezeigten Grundstellung in eine in Fig. 2a und 2b im Detail gezeigten oberen Stellung bewegbar ist, umfasst zwei flache horizontal verlaufende Metallschienen 39, an die die Platte 35 anliegen kann und an deren vorderem Enden 40 die Platte 35 durch in Fig. 2a nicht gezeigte Scharniere angelenkt ist. Ferner sind an die höhenverstellbare Platte 35 zwei Stützen 41 angebracht, die in der oberen Stellung der Platte 35 an eine Innenseite eines Anhängerunterteils 3a anliegen. In dem Anhängerunterteil 3a sind längliche Durchgänge 42 vorgesehen, durch die hindurch die Stützen 41 sowie vertikale Haltebleche 46 der Höhenverstelleinrichtung 38 in einer unteren Stellung geführt sind, und die sich in den Stauraum 37 erstrecken. Die vertikalen Haltebleche sind vorzugsweise einstückig an die Metallschienen 39 angeformt, beispielsweise durch Abkanten.

In einem hinteren Bereich 27a des Anhängerunterteils 3a sind außerdem weitere Stauräume 43 vorgesehen, die beispielsweise zur Aufnahme von Gepäck geeignet sind, und die durch in Fig. 2b und 2c gezeigte Deckel 44 verschließbar sind. Denkbar ist, dass die Stauräume 43 als Kühlfach oder als Aufnahmeraum für Elektronikbauteile eingerichtet sind.

Ferner zeigen Fig. 2a und 2c eine Hülse 45 zur Aufnahme eines Tischbeins eines in Fig. 1d mit 32 bezeichneten drehbaren Tischs. Insbesondere kann das Tischbein in die Hülse eingesteckt werden, wodurch vorteilhaft ein einfacher Auf- und Abbau möglich ist.

Bei einem in Fig. 2d und 2e in einer perspektivischen, teilweise geschnittenen Ansicht gezeigten Campinganhänger 1a sind Details der Höhenverstelleinrichtung 38 erkennbar. An jede der Schienen 39 sind jeweils zwei der vertikalen Haltebleche 46 einstückig angeformt, die mit einem J-förmigen Langloch 47 versehen sind, in das eine mit dem Anhängerunterteil 3b verbundene, ortsfeste Führungsschraube 48 eingreift.

Zur Bewegung der Platte 35 aus der unteren, in Fig. 2e gezeigte Grundstellung in die obere in Fig. 2d gezeigte Stellung wird diese zuerst vertikal in Richtung eines Pfeils 49 und danach horizontal in Richtung eines Pfeils 50 bewegt, so dass die Führungsschraube 48 an ein gebogenes Ende 51 des J-förmigen Langlochs 47 und die Stützen 41 an eine Innenseite des Anhängerunterteils 3a anliegen. Dadurch wird eine zweiseitige Dreipunktabstützung der Platte 35 in einem vorderen, mittleren sowie hinteren Plattenbereich erreicht, wobei im hinteren Bereich die Abstützung durch die Stützen 41 erfolgt.

Damit die Platte 35 bei Bewegung aus der unteren in die obere Stellung nicht ungewollt verschwenkt wird, sind in der Platte 35 zwei Verbindungselemente 52 vorgesehen, die eine lösbare Verbindung der Platte 35 mit jeweils einer der Schienen 39 ermöglichen.

Außerdem ist in Fig. 2a ein als Lattenrost ausgebildetes Rückstellmittel 53 gezeigt, das in den Anhängeroberteil 2a eingebracht und zur Anlage an eine ein- oder mehrteilige Matratze vorgesehen ist. Vorteilhaft wird eine besonders bequeme sowie ergonomische Liegefläche geschaffen, die sich über das Anhängerober- und Anhängerunterteil erstreckt.

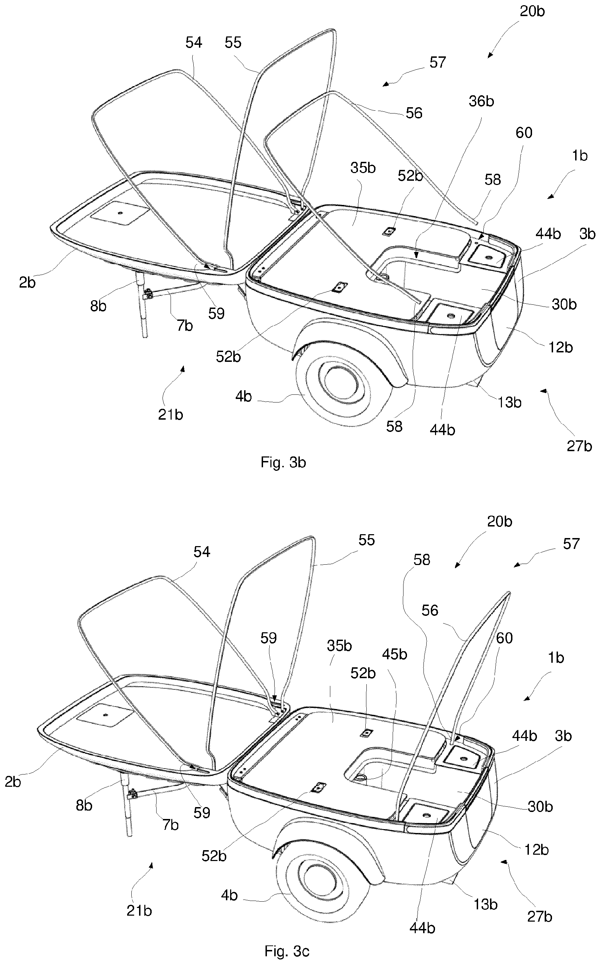

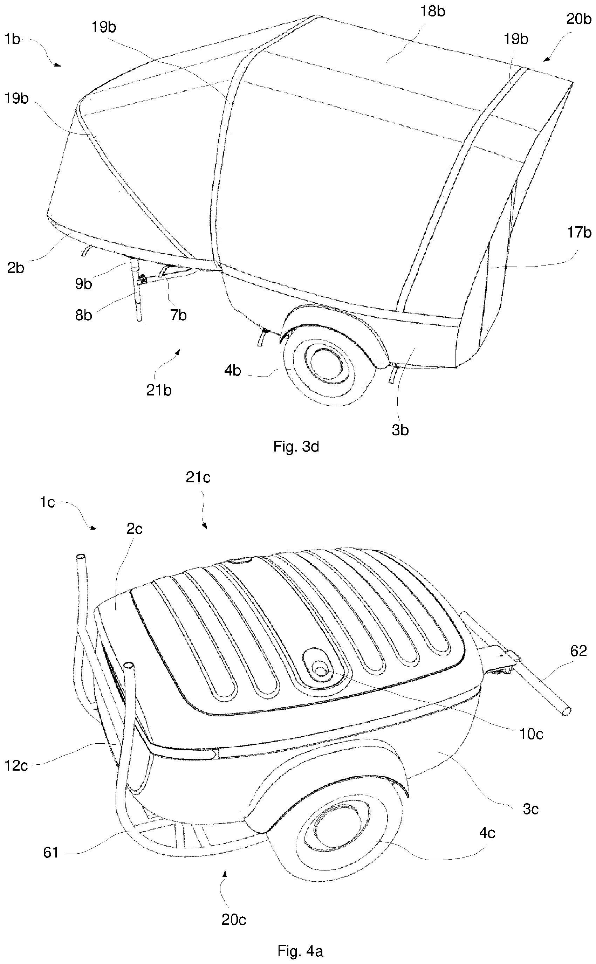

Es wird nun auf Fig. 3 Bezug genommen, wo gleiche oder gleichwirkende Teile mit derselben Bezugszahl wie in Fig. 1 und 2 bezeichnet sind und der betreffenden Bezugszahl jeweils der Buchstabe b beigefügt ist.

Bei einem in Fig. 3a in einer perspektivischen Ansicht aus Gründen der Übersichtlichkeit ohne Zelt gezeigten Zeltanhänger 1b sind in ein Anhängeroberteil 2b drei U-förmige Zeltgestängeteile 54, 55, 56 eines Zeltgestänges 57 eingebracht, von denen die Zeltgestängeteile 54 und 55 an das Anhängeroberteil 2b aus diesem heraus und hinein verschwenkbar angelenkt sind. Das Zeltgestängeteil 56 ist in das Anhängeroberteil 2b eingelegt, wobei dessen untere Enden 58 in Ausnehmungen 59 in einem Anhängerunterteil 3b eingreifen.

Die in Fig. 3a gezeigte Stellung ist eine Zelttransportstellung, in der das in Fig. 3a nicht gezeigte Zelt in das Anhängerunterteil 2b zusammengefaltet verstaut ist.

Zum Aufspannen des Zeltes aus der in Fig. 3a gezeigten Zelttransportstellung über eine in Fig. 3b gezeigte Aufspannstellung, die eine Zwischenstellung ist, in die in Fig. 3c ohne Zelt und Fig. 3d mit Zelt gezeigte Campingstellung können die unteren Enden 58 des in das Anhängerunterteil 2b eingelegten Zeltgestängeteils 56 gegriffen, in Richtung des hinteren Bereichs 27b gezogen sowie um die unteren Enden verschwenkt werden. Dadurch, dass die Zeltgestängeteile 54-56 in in Fig. 1c mit 19 bezeichnete Zeltgestängetaschen eingebracht sind, sind alle Zeltgestängeteile mittelbar durch einen Zeltstoff miteinander verbunden. Durch vorgenannte Bewegung, das heißt die Bewegung des Zeltgestängteteils 56 in Richtung des hinteren Bereichs 27b, werden die beiden gelenkig mit dem Anhängerunterteil 3b verbundenen Zeltgestängeteile 54, 55 über die in Fig. 3b gezeigte Aufspannstellung in die in Fig. 3c und 3d gezeigte Campingstellung mitgenommen.

Vorteilhaft ist ein schnelles Aufspannen des Zelts 18b möglich.

In der in Fig. 3c und 3d gezeigten Campingstellung sind die unteren Enden 58 des Zeltgestängeteils 56 in Haltebohrungen 60 in dem Anhängerunterteil 3b eingesteckt und das Zelt 18b ist mit dem Anhängeroberteil 2b und dem Anhängerunterteil 3b lösbar verbunden.

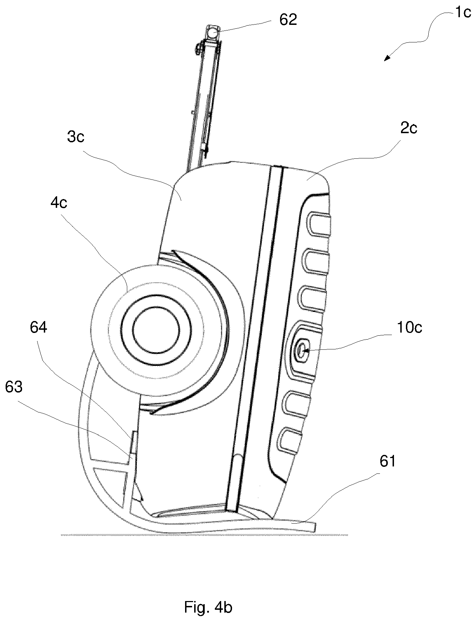

Es wird nun auf Fig. 4 Bezug genommen, wo gleiche oder gleichwirkende Teile mit derselben Bezugszahl wie in Fig. 1 bis 3 bezeichnet sind und der betreffenden Bezugszahl jeweils der Buchstabe c beigefügt ist.

Ein in Fig. 4a und Fig. 4b in einer perspektivischen Ansicht gezeigter Zeltanhänger 1c unterscheidet sich von demjenigen in Fig. 1 bis 3 gezeigten dadurch, dass ein Lagerungsgestell 61 vorgesehen und eine mehrteilige Anhängerdeichsel verkürzt ist. Die Verkürzung wurde erreicht, indem ein rohrförmiges Deichselteil, das in einer Führungshülse der Deichsel, die mit dem Fahrwerk des Campinganhängers 1c verbunden ist, bewegbar geführt gelagert ist, in die Führungshülse eingeschoben wurde. Ferner ist ein Griffstück 62 vorgesehen, welches zum Ersatz einer Deichselkupplung angebracht wurde.

In einer in Fig. 4b gezeigten Lagerungsstellung steht der Zeltanhänger 1c aufrecht auf dem Lagerungsgestell ohne Bodenkontakt, wodurch eine rückseitige Beschädigung eines Anhängeroberteils 3b und Anhängerunterteils 2b vorteilhaft verhindert wird.

In der Lagerungsstellung ist der Zeltanhänger 1c zwischen 2,20 m und 2,40 m hoch, so dass eine Lagerung in einer Kraftfahrzeuggarage problemlos möglich ist.

Das Lagerungsgestell weist zwei auf jeder Seite 20c, 21c in Fig. 4b gezeigte Verbindungsabschnitte 63 auf, die in dafür vorgesehene Aufnahmerohre 64, die in diesem Ausführungsbeispiel als Vierkantrohre ausgebildet sind, einsteckbar sind.

Es versteht sich, dass die Aufnahmerohre 64, insbesondere in einer Ausführungsform als Vierkantrohre, auch zur Aufnahme von Campingaccessoires benutzbar sind, beispielsweise eines Grills mit einem Grillgestell, der passende Verbindungsabschnitte aufweist.

## Patentansprüche

1. Campinganhänger (1-1c) für ein Kraftfahrzeug, insbesondere Zeltanhänger für einen Personenkraftwagen, der ein Räder (4-4c) aufweisendes Anhängerunterteil (3-3c) und ein mit dem Anhängerunterteil bewegbar verbundenes Anhängeroberteil (2-2c) umfasst, das aus einer Reisestellung, in der es einen Anhängerunterteildeckel bildet, in eine Campingstellung, in der der Campinganhänger (1-1c) zur Personenaufnahme geeignet ist, verschwenkbar ist, wobei das Anhängerunterteil (3-3c) eine Ausnehmung (30-30b) aufweist, die in der Campingstellung einen Fußraum für eine in dem Campinganhänger sitzende Person bildet,
**dadurch gekennzeichnet,**
**dass** das Anhängerunterteil (3-3c) eine höhenverstellbare Platte (35; 35b) aufweist, die zur Verwendung als Sitz- oder Liegefläche eingerichtet ist, und die verschwenkbar an eine Höhenverstelleinrichtung angelenkt ist..

2. Campinganhänger nach Anspruch 1,
**dadurch gekennzeichnet,**
**dass** der Fußraum (30-30b) zu einer Seite, insbesondere einer Rückseite des Anhängerunterteils (3-3c), hin offen und vorzugsweise durch ein Verschlusselement (12; 12b; 12c) verschließbar ist.

3. Campinganhänger nach Anspruch 1,
**dadurch gekennzeichnet,**
**dass** die Höhenverstelleinrichtung (38), an die die höhenverstellbare Platte (35; 35b) angelenkt ist, mehrteilig ausgebildet ist.

4. Campinganhänger nach Anspruch 3,
**dadurch gekennzeichnet,**
**dass** die höhenverstellbare Platte (35; 35b) einen Ausschnitt (36; 36b) aufweist.

5. Campinganhänger nach einem der Ansprüche 1 bis 4,
**dadurch gekennzeichnet,**
**dass** das Anhängerunterteil (3-3c) zumindest einen Stauraum (37, 43) umfasst.

6. Campinganhänger nach einem der Ansprüche 1 bis 5,
**dadurch gekennzeichnet,**
**dass** einige Zeltgestängeteile (54-56) eines mehrteiligen Zeltgestänges (57) verschwenkbar mit dem Anhängeroberteil (2-2c) verbunden sind.

7. Campinganhänger nach einem der Ansprüche 1 bis 6,
**dadurch gekennzeichnet,**
**dass** das Anhängeroberteil (2-2c) und das Anhängerunterteil (3-3c) an einer Außenseite und/oder einer Innenseite ein Mittel aufweisen, durch das ein Zelt (18; 18b) mit dem Anhängeroberteil (2-2c) und dem Anhängerunterteil (3-3c) lösbar verbindbar ist.

8. Campinganhänger nach einem der Ansprüche 1 bis 7,
**dadurch gekennzeichnet,**
**dass** der Campinganhänger (1-1c) einen vorzugsweise drehbaren Tisch (32) mit einem Tischbein (34) umfasst, das in den Fußraum (30-30b) hineinragt.

9. Campinganhänger nach einem der Ansprüche 1 bis 8,
**dadurch gekennzeichnet,**
**dass** das Anhängerunterteil (3-3c) zwei auspuffartig gestaltete Versorgungseinrichtungen (13-13b, 14) aufweist, von denen eine erste eine Ladebuchse (15) zum Aufladen einer wiederaufladbaren, in dem Anhängerunterteil (3-3c) verstauten Batterie umfasst und eine zweite (14) vorzugsweise einen Adapter (16) zum Anschluss eines Wasser schlauchs, um aus einem in dem Anhängerunterteil (3-3c) verstauten Wassertank Wasser zu entnehmen.

10. Campinganhänger nach einem der Ansprüche 1 bis 9,
**dadurch gekennzeichnet,**
**dass** das Anhängeroberteil (2-2c) Ausnehmungen (10; 10c) auf seiner Außenseite aufweist, die in der Campingstellung zur Aufnahme vom längenveränderbaren Stützen (8-8b) eingerichtet sind, die vorzugsweise an eine Anhängerdeichsel (6) an gelenkt sind.

11. Campinganhänger nach einem der Ansprüche 1 bis 10,
**dadurch gekennzeichnet,**
**dass** eine Anhängerdeichsel (6) in ihrer Länge veränderbar ist.

12. Campinganhänger nach einem der Ansprüche 1 bis 11,
**dadurch gekennzeichnet,**
**dass** ein Rückstellmittel (53) in das Anhängeroberteil (2-2c) eingebracht ist, das zur Anlage an eine Matratze (22) vorgesehen ist.

13. Campinganhänger nach einem der Ansprüche 1 bis 12,
**dadurch gekennzeichnet,**
**dass** das Anhängerunterteil (3-3c) ein Aufnahmemittel (64) umfasst, das zur Aufnahme eines Lagerungsgestells (61) vorgesehen ist, durch das der Campinganhänger (1-1c) in einer aufrechten Position lagerbar ist.

## Claims

1. Camping trailer (1-1c) for a motor vehicle, especially tent trailer for a passenger car, comprising a lower trailer part (3-3c) with wheels (4-4c) and an upper trailer part (2-2c) which is movably connected to the lower trailer part and which can be pivoted from a traveling position, in which it forms a lower trailer part cover, into a camping position, in which the camping trailer (1-1c) is suitable for accommodating persons, the lower trailer part (3-3c) having a recess (30-30b) which, in the camping position, forms a footwell for a person sitting in the camping trailer,
**characterized in that**
the lower part of the trailer (3-3c) has a height-adjustable plate (35; 35b) which is designed for use as a seating or lying surface and which is pivotably articulated to a height-adjustment device.

2. A camping trailer according to claim 1,
**characterized in that**
**in that** the footwell (30-30b) is open to one side, in particular to a rear side of the lower part (3-3c) of the trailer, and is preferably closable by a closing element (12; 12b; 12c).

3. A camping trailer according to claim 1,
**characterized in that**
**in that** the height adjustment device (38), to which the height-adjustable plate (35; 35b) is articulated, is constructed in several parts.

4. A camping trailer according to claim 3,
**characterized in that**
the height-adjustable plate (35; 35b) has a cut-out (36; 36b).

5. A camping trailer according to one of claims 1 to 4,
**characterized in that**
the lower part of the trailer (3-3c) comprises at least one storage space (37, 43).

6. A camping trailer according to one of claims 1 to 5,
**characterized in that**
some tent frame parts (54-56) of a multi-part tent frame (57) are pivotably connected to the trailer upper part (2-2c).

7. A camping trailer according to one of claims 1 to 6,
**characterized in that**
the upper trailer part (2-2c) and the lower trailer part (3-3c) have, on an outer side and/or an inner side, a means by which a tent (18; 18b) is detachably connectable to the trailer upper part (2-2c) and the trailer lower part (3-3c).

8. A camping trailer according to one of claims 1 to 7,
**characterized in that**
the camping trailer (1-1c) comprises a preferably rotatable table (32) with a table leg (34) which projects into the footwell (30-30b).

9. A camping trailer according to one of claims 1 to 8,
**characterized in that**
the trailer lower part (3-3c) comprises two exhaust-like supply devices (13-13b, 14), a first of which comprises a charging socket (15) for charging a rechargeable battery stowed in the trailer lower part (3-3c) and a second (14) preferably comprises an adapter (16) for connecting a water hose in order to draw water from a water tank stowed in the trailer lower part (3-3c).

10. A camping trailer according to one of claims 1 to 9,
**characterized in that**
the trailer upper part (2-2c) has recesses (10; 10c) on its outer side which, in the camping position, are designed to receive adjustable-length supports (8-8b) which are preferably articulated to a trailer drawbar (6).

11. A camping trailer according to one of claims 1 to 10,
**characterized in that**
a trailer drawbar (6) is variable in length.

12. A camping trailer according to one of claims 1 to 11,
**characterized in that**
a restoring means (53) is incorporated into the trailer upper part (2-2c), which restoring means is provided for abutment against a mattress (22).

13. A camping trailer according to one of claims 1 to 12,
**characterized in that**
the trailer lower part (3-3c) comprises a receiving means (64) which is provided for receiving a storage frame (61) by means of which the camping trailer (1-1c) can be stored in an upright position.

## Revendications

1. Remorque de camping (1-1c) pour un véhicule automobile, en particulier remorque de tente pour une voiture de tourisme, comprenant une partie inférieure de la remorque (3-3c) avec des roues (4-4c) et une partie supérieure de la remorque (2-2c) qui est reliée de manière mobile à la partie inférieure de la remorque et qui est pivotable d'une position de voyage, dans laquelle elle forme un couvercle de partie inférieure de la remorque, à une position de camping, dans laquelle la remorque de camping (1-1c) est apte à accueillir des personnes, la partie inférieure de la remorque (3-3c) ayant un renfoncement (30-30b) qui, dans la position de camping, forme un espace pour les pieds d'une personne assise dans la remorque de camping, **caractérisé en ce que**
la partie inférieure de la remorque (3-3c) comporte une plaque réglable en hauteur (35 ; 35b) conçue pour servir de surface d'assise ou de couchage et articulée de manière pivotante sur un dispositif de réglage en hauteur.

2. Remorque de camping selon la revendication 1,
**caractérisée en ce que**
l'espace pour les pieds (30-30b) est ouverte sur un côté, en particulier sur un côté arrière de la partie inférieure (3-3c) de la remorque, et peut de préférence être fermée par un élément de fermeture (12 ; 12b ; 12c).

3. Remorque de camping selon la revendication 1,
**caractérisée en ce que**
le dispositif de réglage en hauteur (38), auquel la plaque réglable en hauteur (35 ; 35b) est articulée, est construit en plusieurs parties.

4. Remorque de camping selon la revendication 3,
**caractérisée en ce que**
la plaque réglable en hauteur (35 ; 35b) comporte une découpe (36 ; 36b).

5. Remorque de camping selon l'une des revendications 1 à 4,
**caractérisée en ce que**
la partie inférieure de la remorque (3-3c) comprend au moins un espace de rangement (37, 43).

6. Remorque de camping selon l'une des revendications 1 à 5,
**caractérisée en ce que**
certains éléments (54-56) d'un cadre de tente en plusieurs parties (57) sont reliés de manière pivotante à la partie supérieure de la remorque (2-2c).

7. Remorque de camping selon l'une des revendications 1 à 6,
**caractérisée en ce que**
la partie supérieure de la remorque (2-2c) et la partie inférieure de la remorque (3-3c) ont, sur un côté extérieur et/ou un côté intérieur, un moyen par lequel une tente (18 ; 18b) peut être connectée de manière amovible à la partie supérieure de la remorque (2-2c) et à la partie inférieure de la remorque (3-3c).

8. Remorque de camping selon l'une des revendications 1 à 7,
**caractérisée en ce que**
la remorque de camping (1-1c) comprend une table (32), de préférence rotative, avec un pied de table (34) qui fait saillie dans l'espace pour les pieds (30-30b).

9. Remorque de camping selon l'une des revendications 1 à 8,
**caractérisée en ce que**
la partie inférieure de la remorque (3-3c) comprend deux dispositifs d'alimentation (13-13b, 14) en forme d'échappement, dont le premier comprend une prise de charge (15) pour charger une batterie rechargeable rangée dans la partie inférieure de la remorque (3-3c) et le second (14) comprend de préférence un adaptateur (16) pour raccorder un tuyau d'eau afin de tirer de l'eau d'un réservoir d'eau rangé dans la partie inférieure de la remorque (3-3c).

10. Remorque de camping selon l'une des revendications 1 à 9,
**caractérisée en ce que**
la partie supérieure de la remorque (2-2c) présente sur son côté extérieur des évidements (10 ; 10c) qui, en position de camping, sont destinés à recevoir des supports de longueur réglable (8-8b) qui sont de préférence articulés sur un timon de la remorque (6).

11. Remorque de camping selon l'une des revendications 1 à 10,
**caractérisée en ce que**
le timon de la remorque (6) est de longueur variable.

12. Remorque de camping selon l'une des revendications 1 à 11,
**caractérisée en ce que**
un moyen de retenue (53) est incorporé dans la partie supérieure de la remorque (2-2c), lequel moyen de retenue est prévu pour venir en butée contre un matelas (22).

13. Remorque de camping selon l'une des revendications 1 à 12,
**caractérisée en ce que**
la partie inférieure de la remorque (3-3c) comprend un moyen de réception (64) prévu pour recevoir un cadre de rangement (61) au moyen duquel la remorque de camping (1-1c) peut être rangée en position verticale.
